# EUROPEAN PATENT SPECIFICATION

(11) **EP 4 518 254 B1**
(45) Date of publication and mention of the grant of the patent: **09.09.2026**
(21) Application number: 24222256.0
(22) Date of filing: 20.12.2024
(51) Int. Cl.: H04L 9/40

(54) **METHOD FOR PROCESSING ACCESS REQUEST, APPARATUS, NETWORK BOUNDARY DEVICE, AND SYSTEM**
VERFAHREN ZUR VERARBEITUNG EINER ZUGRIFFSANFORDERUNG, VORRICHTUNG, NETZWERKBEGRENZUNGSVORRICHTUNG UND SYSTEM
PROCÉDÉ DE TRAITEMENT DE DEMANDE D'ACCÈS, APPAREIL, DISPOSITIF DE LIMITE DE RÉSEAU ET SYSTÈME

(30) Priority: 18.09.2024 CN 202411304569
(43) Date of publication of application: 05.03.2025
(73) Proprietor: Beijing Baidu Netcom Science Technology Co., Ltd., Beijing 100085 (CN)
(72) Inventor: CHENG, Bo, Beijing, 100085 (CN); ZHANG, Chao, Beijing, 100085 (CN); LIU, Lu, Beijing, 100085 (CN)
(74) Representative: Lucke, Andreas

(56) References cited:
- CN-A- 112 350 833
- CN-A- 118 200 023
- US-A1- 2013 083 725
- US-A1- 2020 169 880

## Description

### TECHNICAL FIELD

This invention relates to the technical field of information security, and more particularly, to a method and apparatus for processing an access request, a network boundary device, a system, a computer readable storage medium, and a computer program product.

### BACKGROUND

With the rapid development of network technology, higher requirements have been placed on the secure access mechanisms for data centers. Terminal devices typically access the company's internal network through two stages: the networking stage and the wireless access control stage. During the networking stage, terminal devices can connect to the company's local area network (LAN) through wired or wireless communication methods. In the wireless access control stage, secure network access is achieved through identity authentication and authorization of terminal devices, and access control and permission management for these devices can be implemented.
CN 118200023A describes a system in which a backend server parses an incoming access request to extract the client IP address, an application identifier and a target-service identifier. The server then obtains a user identifier from the application, generates an access token that embeds resource-permission information, and returns the token to the client.
CN 112350833A describes a split-architecture device that inspects RADIUS accounting packets to learn the mapping between user names and dynamically assigned IP addresses.
US 2020/0169880A describes a MEC platform that authenticates service requests via an authentication server and a permission server.
US 2013/0083725 A1 describes a method and apparatus for enforcing a common user policy within an enterprise network, which proposes a bidirectional user policy architecture applicable to both wired and wireless access scenarios. The bidirectional policy acts as both a down-link policy and an up-link policy, controlling data transmission from a user IP address to an allowed address range (request path) and from the allowed address range back to the user IP address (response path) respectively.

### SUMMARY

Embodiments of the present invention provide a method and apparatus for processing an access request, a network boundary device, a system, an electronic device, a computer readable storage medium, and a computer program product, so that dynamic management of an access control policy can be realized.

According to a first aspect, the present invention provides a method for processing an access request as defined in claim 1.

According to a second aspect, the present invention provides an apparatus for processing an access request as defined in claim 7.

According to a third aspect, the present invention provides a network boundary device as defined in claim 8.

According to a fourth aspect, the present invention provides a system for processing an access request as defined in claim 9.

According to a fifth aspect, present invention provides a non-transitory computer-readable storage medium as defined in claim 11. In a seventh aspect, the present invention provides a computer program product as defined in claim 12. Preferred embodiments of the invention are defined in the dependent claims.

It should be understood that the content described in this section is not intended to identify key or important features of the embodiments disclosed herein, nor is it intended to limit the scope of the invention. The other features disclosed herein will be easily understood through the following description.

### BRIEF DESCRIPTION OF THE DRAWINGS

Through detailed descriptions of non-limiting embodiments given with reference to the following accompanying drawings, other features, objectives and advantages of the present invention will be more apparent. The accompanying drawings are used for a better understanding of the scheme, and do not constitute a limitation to the present invention. Here:
FIG. 1 is an exemplary system architecture in which the present invention may be applied;
FIG. 2 is a flowchart of a method for processing an access request according to an embodiment of the present invention;
FIG. 3 is a schematic diagram of a system architecture of a specific application scenario of a method for processing an access request according to an embodiment of the present invention;
FIG. 4 is a flowchart of a method of processing an access request according to another embodiment of the present invention;
FIG. 5 is a structural block diagram of an apparatus for processing an access request according to an embodiment of the present invention;
FIG. 6 is a structural block diagram of a system for processing an access request according to an embodiment of the present invention;
FIG. 7 is a schematic structural diagram of an electronic device adapted for performing a method for processing an access request according to an embodiment of the present invention.

### DETAILED DESCRIPTION OF EMBODIMENTS

Exemplary embodiments of the present invention are described below in combination with the accompanying drawings, and various details of the embodiments of the present invention are included in the description to facilitate understanding, and should be considered as exemplary only. Accordingly, it should be recognized by one of ordinary skill in the art that various changes and modifications may be made to the embodiments described herein. Also, for clarity and conciseness, descriptions for well-known functions and structures are omitted in the following description. It should be noted that the embodiments in the present invention and the features in the embodiments may be combined with each other on a non-conflict basis.

In the technical solution of the present invention, the processes of collecting, storing, using, processing, transmitting, providing, and disclosing the user's personal information all comply with the provisions of the relevant laws and regulations, and do not violate the public order and good customs.

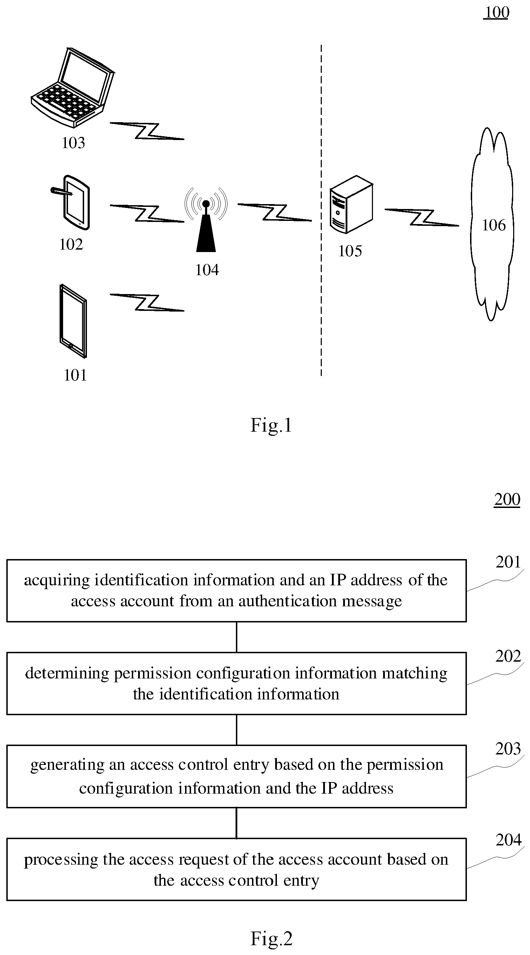

FIG. 1 illustrates an exemplary system architecture 100 in which an embodiment of a method for processing an access request, apparatus, electronic device, and computer readable storage medium of the present invention may be applied.

As shown in FIG. 1, the system architecture 100 may include terminal devices 101, 102, 103, a network access device 104, a network boundary device 105, and a resource service system 106.

The terminal devices 101, 102 and 103 may access a wireless network via a network access device 104 based on a WiFi (Wireless Fidelity) connection. The network access device 104 may include, for example, a wireless AP (access point), a wireless controller, or the like. The wireless network may be, for example, a WLAN (Wireless Local Area Network, wireless local area network). The terminal devices 101, 102, and 103 are communication devices connected to the wireless network, for example, devices having a wireless network receiving function such as a notebook computer, a mobile phone, and a tablet computer.

The user may use the terminal devices 101, 102, 103 to interact with the resource service system 106 in the intranet via the network boundary device 105 to receive or send messages or for data transmission, etc. To accomplish this, the terminal devices 101, 102, 103 and the network boundary device 105 may be provided with various applications for implementing information communication between the terminal device and the network boundary device, such as a remote control type application, a configuration modification application, an instant messaging application, and the like.

The intranet may be a local communication network formed by connecting various computers, servers, databases and the like, which are deployed by a specific enterprise or a specific organization. The network boundary device 105 may be a wireless gateway, may be an electronic device such as a router or a switch, or may be an integrated product of an electronic device with other functions. The present invention sets no limitation on the specific device configuration and the technology employed by the network boundary device 105. In one embodiment, the network boundary device 105 may be a network firewall deployed for an intranet, and the network firewall may perform filtering on packets or traffic packets entering and leaving the intranet, such as forwarding, permitting, denying, or dropping packets or traffic packets according to preset rules or access control policies.

The network boundary device 105 may provide various services through built-in hardware or software modules or various applications, for example, may provide access request processing services. Taking a remote control type application as an example, the network boundary device 105 may achieve the following effects when running the remote control type application: first, the network boundary device 105 acquires the identification information and the IP address of the access account from the authentication message. the network boundary device 105 may then determine permission configuration information matching the identification information of the access account; next, an access control entry is generated based on the determined permission configuration information and the IP address of the access account; and finally, the access request initiated by the access account is processed based on the generated access control entry.

The method for processing the access request provided by the subsequent embodiments of the present invention is performed by the network boundary device 105, and accordingly, the apparatus for processing the access request is also generally arranged in the network boundary device 105.

It should be understood that the number of terminal devices, network access devices, network boundary devices and resource service systems in FIG. 1 are merely illustrative. There may be any number of terminal devices, network access devices, network boundary devices, and resource service systems as required by the implementation.

It should be noted that the system architecture and application scenarios described in the present invention are intended to describe the technical solutions of the present invention more clearly, and do not constitute a limitation on the technical solutions provided in the present invention. A person of ordinary skill in the art would understand that the technical solutions provided in the present invention are equally applicable to similar technical problems, with the evolution of the system architecture and the emergence of new service scenarios.

Referring to FIG. 2, which is a flow chart of a method of processing an access request according to an embodiment of the present invention, the process 200 includes the following steps.

Step 201 includes: acquiring identification information and an IP address of an access account from an authentication message.

This step is intended to acquire the identification information and the IP address of the access account from the authentication message according to the acquire authentication message by an executing body of the method for processing the access request (for example, the network boundary device 105 shown in FIG. 1). The identification information may be a username (user name) or an ID (identity) created when the access account is registered, the identification information is bound to the access account, and the access account may be associated through the identification information. The access account may use the identification information to perform network access requests, authentication, access requests, and the like.

The above-mentioned execution body may capture an authentication message of the access account, and acquire identification information of the access account and an IP (Internet Protocol) address from the captured authentication message.

Step 202 includes: determining permission configuration information matching the identification information.

On the basis of step 201, this step is intended to determine the permission configuration information of the access account to which the identification information is bound by the execution body. The permission configuration information of the access account may be an intranet resource or service permitted to be accessed, an intranet resource or service prohibited to be accessed, or the like. Different access accounts may have different permission configurations.

Step 203 includes: generating an access control entry based on the permission configuration information and the IP address.

On the basis of step 202, this step is intended to generate an access control policy by the above-mentioned execution body based on the determined permission configuration information and the IP address of the access account. The access control policy may be, for example, an ACL (Access Control List), which is a five-tuple policy that either permits or denies access. The five-tuple information includes a source port, a source IP address/network segment, a destination port, a destination IP address/network segment, and a network protocol.

Step 204 includes: processing the access request of the access account based on the access control entry.

On the basis of the above-mentioned step 201-203, this step is intended to process, by the above-mentioned execution body, an access request subsequently initiated by the access account based on the generated access control entry. For example, the access request may be processed according to the source IP address and the destination IP address in the access request. The access request may be processed based on the ACL quintuple information, and the incoming and outgoing data packets are filtered one by one to allow or deny the data packets.

In some embodiments, access permissions may be configured for an access account according to preset rules or policies when registering the access account, thereby controlling internal network resources accessible by the access account. For example, different access permissions may be configured according to an employee's business department and an employee level.

In some embodiments, in step 202, the role type of the access account may be determined based on the identification information, and permission configuration information matching the identification information is determined according to the access permission corresponding to the preset role type. For example, access accounts may be grouped according to a preset grouping rule, and a corresponding access permission is configured for each group, for example, a resource service system accessible by each group or a resource service system prohibited from accessing.

According to the invention, the authority configuration information matching the identification information is determined in step 202 based on the account attribute information bound to the identification information, where the account attribute information includes one or more of a service type, an account level, and a security level. For example, according to the service type to which the access account belongs, such as R & D, finance, or sales, the access permission corresponding to the service type is set. For another example, the matching permission configuration information may be determined according to whether the account level of the access account belongs to a management layer or an employee, or according to a historical security level of the access account, or the like.

According to the processing method of the access request provided in the embodiment of the present invention, the permission configuration information matching the IP address is determined according to the identification information of the access account and the IP address in the authentication message, and the access request of the access account is processed by generating an access control entry according to the permission configuration information and the IP address. On the one hand, different access permissions can be set according to a role type of an access account or account attribute information, so that detailed access permission management is realized, flexible setting requirements for different access permissions are met, and internal network resources or services accessible by a user can be accurately controlled; and on the other hand, even if the IP of the access account changes at any time, by associating the IP address in the data packet to the access account in real time and determining the matching permission configuration information, the access request based on the IP address can be processed based on the generated access control entry, so that the dynamic management of the access control policy is realized, thereby effectively improving the security of the system.

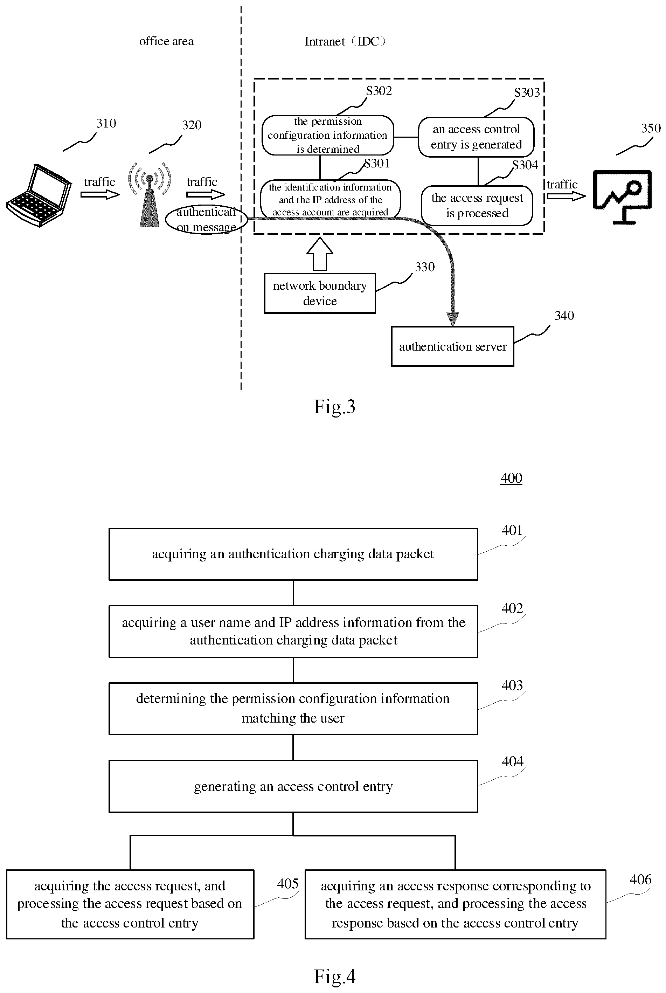

Referring next to FIG. 3, there is shown a schematic diagram of a system architecture of a specific application scenario of a method for processing an access request according to an embodiment of the present invention.

As shown in FIG. 3, a user may initiate an access request to the network access device 320 via the terminal device 310, for example, may request to join a wireless local area network, such as a WLAN network in which an office area is located, based on WiFi protocol by using identification information (e.g., user name, user ID, etc.) and a password.

When the terminal device 310 accesses the wireless local area network, the terminal device 310 initiates an authentication request message to the authentication server 340 through a network access device 320 such as an AP or a wireless controller, for example, 802.1X (port-based network access control) authentication. After passing the authentication, the authentication server 340 may allocate an IP address to the terminal device 310. It should be noted that the IP address may change according to the change of the environment or the location information of the terminal device 310. After passing the authentication, the network access device 320 may send the authentication charging data packet corresponding to the authentication request using the identification information and the IP address for charging. The authentication request may be sent to the Radius Server (Authentication Server) based on, for example, the Radius (Remote Authentication Dial In User Service) protocol, and the authentication charging data packet corresponding to the authentication request may be a Radius Accounting (charging) data packet.

Next, when the terminal device 310 needs to access the intranet server 350, an access request may be sent by the network access device 320, to the network boundary device 330. The network boundary device 330 processes the access request accordingly.

As shown in FIG. 3, the method for processing the access request by the network boundary device 330 may include the following main steps.

In step S301, the identification information and the IP address of the access account are acquired.

The network boundary device 330 may capture an authentication message sent by the network access device 320 to the authentication server 330, and acquire identification information and an IP address of the access account from the captured authentication message.

In step S302, the permission configuration information is determined.

The network boundary device 330 determines the corresponding permission configuration information based on the role type of the access account or the account attribute information or the like, so that the intranet resources or services accessible by the user can be accurately controlled, thereby implementing fine access permission management at the user level.

In step S303, an access control entry is generated.

The network boundary device 330 may generate an access control entry based on the determined permission configuration information and the IP address of the access account. The access control entry is generated based on the IP address, and the access control policy may be associated with the IP address. Even if the IP address of the access account changes, the access control of the access account can be dynamically realized.

In step S304, the access request is processed.

The network boundary device 330 may process access requests for access accounts based on the generated access control entries. Real-time access permission control is performed according to the dynamic IP of the access account, so that the internal network resources accessible by the user can be effectively controlled, and secure access control of an internal enterprise resource service, a service system and the like can be realized.

The specific implementation of step S301-S304 and the technical effects thereof may be described with reference to the related description of step 201-204 in the corresponding embodiment of FIG. 2, and details are not described herein.

In the system architecture shown in FIG. 3, the intranet server 350 may be some resource server, platform, or service system deployed in an IDC (Internet Data Center). For example, an ERP (Enterprise Resource Planning) system, a research and development platform, and the like. The network boundary device 330, which may be one or more of a network firewall, a router, a gateway, or a switch, may be deployed at the boundaries of the wireless local area network and the IDC of the intranet in the office environment.

A method for processing an access request according to another embodiment of the present invention will be described in detail below in conjunction with FIG. 4.

FIG. 4 is a flowchart of a method for processing an access request according to an embodiment of the present invention. The process may be executed by, for example, the network boundary device described above. Referring to the process 400 shown in FIG. 4, the process 400 may include the following steps.

Step 401 includes: acquiring an authentication charging data packet.

After the Radius authentication request initiated by the access account is verified, a corresponding Radius Accounting data packet is sent, and the Radius Accounting data packet passes through the network boundary device. The network boundary device detects the incoming and outgoing packets one by one, and may capture the Radius Accounting packet when the Radius Accounting packet arrives.

Step 402 includes: acquiring a user name and IP address information from the authentication charging data packet.

In some embodiments of the present embodiment, the username and the IP address information of the access account are acquired from the captured Radius Accounting data packet. Username is the identification information of the access account and can be used to uniquely identify the access account, and the IP address is the current IP address of the access account.

Step 403 includes: determining the permission configuration information matching the user.

In some embodiments of the present embodiment, the matching permission configuration information may be determined according to the role type corresponding to the access account. For example, if the role type of the access account is an internal employee, the access account may be allowed to access the intranet ERP system, while if the role type is an outsourcing employee, the access account is prohibited to access the intranet ERP resources. Illustratively, different access permissions corresponding to role types may be pre-configured using a permission control model. For example, permission configuration may be performed using an RBAC (Role Based Access Control) model. The RBAC model may provide access to resources or information based on user roles to control intranet resource services or service systems accessible by access accounts.

In other embodiments of the present embodiment, the matching permission configuration information may be determined based on the account attribute information of the access account. For example, if the account level information in the account attribute information of the access account is a senior management person or an intermediate management person, the access account is allowed to access all the intranet resources or services, and if the account level information is an ordinary employee, the access account is only allowed to access a part of the intranet resources or services, etc.

Step 404 includes: generating an access control entry.

The access control entry may be generated based on the determined permission configuration information and the IP address of the access account. The access control entry is generated based on the IP address, and the access control policy may be associated with the IP address. Even if the IP address of the access account changes, the access control of the access account can be dynamically realized.

In some embodiments of the present embodiment, the network boundary device may set the source IP address according to the IP address of the access account, and set the destination port and/or the destination IP address according to the port range and/or the IP address segment allowed by the permission configuration information, thereby generating an ACL for intranet access according to the set source IP address, the destination port, and the destination IP address. The port range or IP address segment allowed by the permission configuration information indicates an intranet resource or service that can be accessed by the access account.

In some alternative implementations of the present embodiment, there may be a corresponding relationship between the port range allowed by the permission configuration information and the IP address segment allowed by the permission configuration information.

In some alternative implementations of the present embodiment, the network boundary device may set the destination port according to the port range allowed by the permission configuration information; or set a destination IP address according to the IP address segment corresponding to the port range allowed by the permission configuration information; or set a destination IP address according to the IP address segment allowed by the permission configuration information; or set a destination port and a destination IP address according to a port range and an IP address segment that are allowed by the permission configuration information; or set the destination port according to the port range corresponding to the IP address segment allowed by the permission configuration information.

In some alternative implementations of the present embodiment, the network boundary device may also generate a bi-directional ACL to perform bi-directional filtering on data packets entering and leaving the intranet, thereby further improving information security of the intranet resource service system. For example, a first access control entry may be generated for an access request requesting access to an intranet service, and a second access control entry may be generated for an access response of an intranet server in response to the access request, or an access request to a terminal device initiated by the intranet server.

Illustratively, generating the first access control entry may include setting the first source IP address according to the IP address of the access account, and setting the first destination port and/or the first destination IP address according to the port range and/or the IP address segment allowed by the determined permission configuration information; and further, the first access control entry is generated according to the set first source IP address and the first destination port and/or the first destination IP address.

According to the invention, generating the second access control entry includes setting the second destination IP address according to the IP address of the access account, and setting the second source IP address according to the IP address segment allowed by the determined permission configuration information, thereby generating the second access control entry according to the set second destination IP address and the second source IP address.

Step 405 includes: acquiring the access request, and processing the access request based on the access control entry.

When the access account initiates the access request, the access request carries the active IP address and the destination IP address. The source IP address is the current IP address of the access account, and the destination IP address is the IP address of the server to be accessed by the access request.

According to the invention, taking the generation of the bidirectional ACL as an example, when the network boundary device acquires the access request, the network boundary device acquires the source IP address, the destination port, and the destination IP address in the access request, and then associates the source IP address in the access request to the first access control entry, thereby allowing or denying the access request according to whether the destination port in the access request belongs to the first destination port in the first access control entry and whether the destination IP address belongs to the first destination IP address.

Step 406 includes: acquiring an access response corresponding to the access request, and processing the access response based on the access control entry.

In some alternative implementations of the present embodiment, the network boundary device may also perform access permission control on the access response of the corresponding access request returned by the intranet server.

Illustratively, when the network boundary device acquires the access response corresponding to the access request according to the generated bi-directional ACL, the network boundary device acquires the source IP address and the destination IP address in the access response, and then associates the source IP address and the destination IP address in the access response to the second access control entry, thereby allowing or denying the access response according to whether the destination IP address in the access response belongs to the second source IP address in the second access control entry.

According to the method for processing the access request provided in the embodiment of the present invention, different access permissions can be configured according to role types of access accounts, account attribute information, or the like, and an access control entry is generated by determining permission configuration information matching the IP address, so that bi-directional access permission control can be performed on a data packet entering or leaving an intranet according to the generated access control entry, thereby implementing fine bi-directional access permission control.

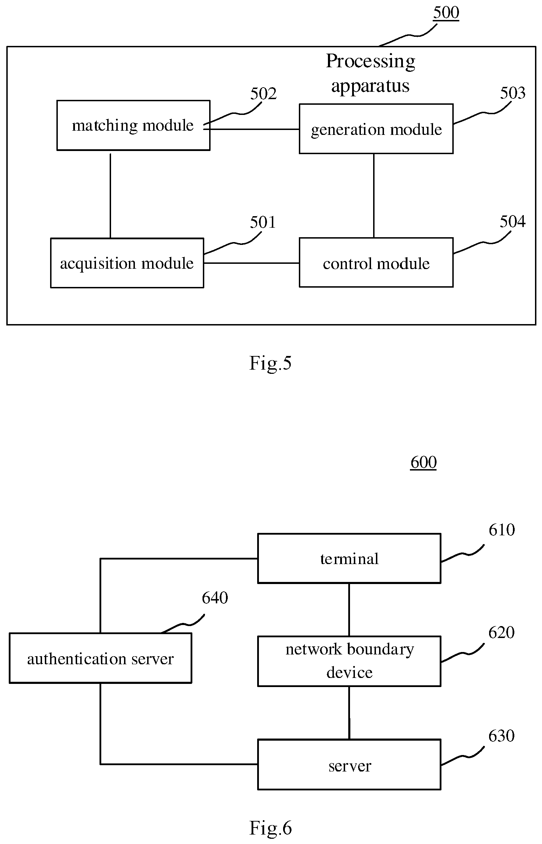

With continued reference to FIG. 5, as an implementation of the method shown in above figures, the present invention provides an embodiment of an apparatus for processing an access request corresponding to the method embodiment shown in FIG. 2, which may be specifically applied to the network boundary device 105 or to various electronic devices.

As shown in FIG. 5, the apparatus for processing an access request 500 of the present embodiment may include an acquisition module 501, a matching module 502, a generation module 503, and a control module 504. The acquisition module 501 is configured to acquire the identification information and the IP address of the access account from the authentication message; the matching module 502 is configured to determine permission configuration information matching the identification information; the generation module 503 is configured to generate an access control entry based on the permission configuration information and the IP address; and the control module 504 is configured to process access requests of access accounts based on access control entries.

In the present embodiment, in the processing apparatus 500 of the access request, the acquisition module 501, the matching module 502, the generation module 503, the control module 504, and the technical effects thereof may be described with reference to the related description of step 201-204 in the corresponding embodiment in FIG. 2, and details are not described herein again.

In some alternative implementations of the present embodiment, the matching module 502 is further configured to determine the role type of the access account based on the identification information; and determine permission configuration information matching the identification information according to the access permission corresponding to the preset role type.

According to the invention, the matching module 502 is further configured to determine permission configuration information matching the identification information based on the account attribute information bound to the identification information, the account attribute information including one or more of a service type, an account level, and a security level.

In some alternative implementations of the present embodiment, the acquisition module 501 is further configured to acquire the identification information and the IP address of the access account from the charging data packet corresponding to the authentication request in response to the authentication request initiated by the access account being verified. The authentication request may be sent based on the Radius protocol; and the charging data packet corresponding to the authentication request includes a Radius Accounting data packet.

In some alternative implementations of the present embodiment, the generation module 503 is further configured to set the first source IP address according to the IP address of the access account, and to set the first destination port and/or the first destination IP address according to the port range and/or the IP address segment allowed by the determined permission configuration information, thereby generating the first access control entry according to the set first source IP address and the first destination port and/or the first destination IP address. The acquisition module 501 is further configured to acquire a source IP address, a destination port, and a destination IP address in the access request in response to acquiring the access request. The control module 504 is further configured to associate the source IP address in the access request with the first access control entry; and allow or deny the access according to whether the destination port and the destination IP address in the access request belong to the first destination port and the first destination IP address in the first access control entry.

In some alternative implementations of the present embodiment, the generation module 503 is further configured to set the second destination IP address according to the IP address of the access account, set the second source IP address according to the IP address segment allowed by the determined permission configuration information, and generate the second access control entry according to the set second destination IP address and the second source IP address. The acquisition module 501 is further configured to acquire a source IP address and a destination IP address in the access response in response to acquiring an access response corresponding to the access request. The control module 504 is further configured to associate the destination IP address in the access response with the second access control entry; and allow or deny the access response according to whether the destination IP address in the access response belongs to the second source IP address in the second access control entry.

The present embodiment exists as an apparatus embodiment corresponding to the above-described method embodiment. The apparatus for processing an access request according to the present embodiment determines the permission configuration information matching the IP address according to the identification information of the access account in the authentication message and the IP address, and generates an access control entry according to the permission configuration information and the IP address to process the access request of the access account. On the one hand, different access permissions may be set according to role types of access accounts or account attribute information, so that detailed access permission management is realized, flexible setting requirements for different access permissions are met, and internal network resources or services accessible by a user can be accurately controlled. On the other hand, even if the IP of the access account changes at any time, by associating the IP address in the data packet to the access account in real time and determining the matching permission configuration information, the access request based on the IP address can be processed based on the generated access control entry, so that the dynamic management of the access control policy is realized, thereby effectively improving the security of the system.

With further reference to FIG. 6, embodiments of the present invention also provide a system for processing an access request. System 600 may include a terminal 610, a network boundary device 620, and a server 630.

As shown in FIG. 6, the terminal 610 may be a terminal device or a network access device. The server 630 may be a resource service system located at an intranet IDC. The network boundary device 620 may be at least one of a firewall, a gateway, or a router located at the boundary of the wireless local area network and the intranet IDC.

The terminal 610 may be configured to initiate an access request including an IP address of an access account to the server 630. The server 630 may be configured to receive an access request and send an access response corresponding to the access request to the terminal 610. Further, the terminal 610 may be configured to initiate an access request to the server 630 after accessing the wireless local area network.

In some alternative implementations of the present embodiment, the system 600 further includes an authentication server 640. The terminal 610 may be further configured to initiate an authentication request to the authentication server 640, and after the authentication request is verified, send a charging data packet corresponding to the authentication request to the authentication server 640, the charging data packet including the identification information of the access account and the IP address. The authentication server 640 may be configured to authenticate the access account based on the received authentication request. The authentication request may be sent based on the Radius protocol. The charging data packet corresponding to the authentication request may be a Radius Accounting data packet.

In the present embodiment, the network boundary device 620 may include the apparatus 500 for processing the access request in previous embodiments. For the acquisition module 501, the matching module 502, the generation module 503 and the control module 504 in the apparatus 500 for processing an access request, and the technical effects thereof, reference may be made to step 201-204 in the corresponding embodiment of FIG. 2 and the related description in the corresponding embodiment of FIG. 5, respectively, and details are not described herein again.

According to the system 600 for processing the access request provided in the present embodiment, by deploying the network access device 620 at the boundary of the wireless local area network and the intranet, the access control entry can be automatically generated to realize bidirectional filtering processing of the intranet access request, without changing the terminal, the authentication server, and the intranet server, and without developing a dedicated client application. In addition, updating or adjusting the permission configuration information is more convenient and has a higher fault tolerance capability.

According to an embodiment of the present invention, the present invention further provides an electronic device including at least one processor; and a memory in communication with the at least one processor; The memory stores instructions executable by the at least one processor to enable the at least one processor, when executed, to implement the method for processing the access request described in any of the above embodiments.

According to an embodiment of the present invention, the present invention further provides a readable storage medium having computer instructions stored thereon for enabling a computer to implement a method for processing an access request described in any of the above embodiments when executed.

According to an embodiment of the present invention, the present invention also provides a computer program product that, when executed by a processor, is capable of implementing a method for processing an access request described in any of the above embodiments.

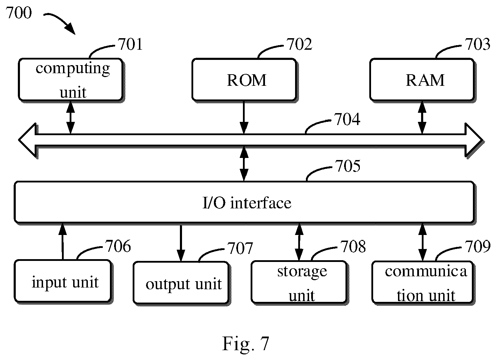

FIG. 7 shows a schematic block diagram of an example electronic device 700 that may be used to implement embodiments of the present invention. Electronic devices are intended to represent various forms of digital computers, such as laptop computers, desktop computers, worktables, personal digital assistants, servers, blade servers, mainframe computers, and other suitable computers. Electronic devices may also represent various forms of mobile devices, such as personal digital processing, cellular telephones, smart phones, wearable devices, and other similar computing devices. The components shown herein, their connections and relationships, and their functions are by way of example only and are not intended to limit the implementation of the invention described and/or claimed herein.

As shown in FIG. 7, the device 700 includes a computing unit 701, which may perform various appropriate actions and processes according to a computer program stored in a read-only memory (ROM) 702 or a computer program loaded into a random access memory (RAM) 703 from a storage unit 708. In RAM 703, various programs and data required for operation of the device 700 may also be stored. The calculation unit 701, ROM 702 and RAM 703 are connected to each other via a bus 704. An input/output (I/O) interface 705 is also connected to bus 704.

A plurality of components in the device 700 are connected to the I/O interface 705, including an input unit 706, such as a keyboard, a mouse, and the like; an output unit 707, for example, various types of displays, speakers, and the like; a storage unit 708, such as a magnetic disk, an optical disk, or the like; and a communication unit 709, such as a network card, a modem, or a wireless communication transceiver. The communication unit 709 allows the device 700 to exchange information/data with other devices over a computer network such as the Internet and/or various telecommunications networks.

The computing unit 701 may be various general-purpose and/or special-purpose processing components having processing and computing capabilities. Some examples of computing units 701 include, but are not limited to, central processing units (CPUs), graphics processing units (GPUs), various specialized artificial intelligence (AI) computing chips, various computing units running machine learning model algorithms, digital signal processors (DSPs), and any suitable processors, controllers, microcontrollers, and the like. The calculation unit 701 performs various methods and processes described above, such as a method for processing an access request. For example, in some embodiments, the method for processing the access request may be implemented as a computer software program tangibly embodied in a machine-readable medium, such as a storage unit 708. In some embodiments, some or all of the computer program may be loaded and/or installed on the device 700 via the ROM 702 and/or the communication unit 709. When the computer program is loaded into the RAM 703 and executed by the calculation unit 701, one or more steps of the method for processing the access request described above may be performed. Alternatively, in other embodiments, the computing unit 701 may be configured to perform the method for processing the access request by any other suitable means (e.g., by means of firmware).

The various embodiments of the systems and techniques described above herein may be implemented in a digital electronic circuit system, an integrated circuit system, a field programmable gate array (FPGA), an application specific integrated circuit (ASIC), a special purpose standard product (ASSP), a system on a system on a chip (SOC), a load programmable logic device (CPLD), computer hardware, firmware, software, and/or combinations thereof. These various embodiments may include being implemented in one or more computer programs that may execute and/or interpret on a programmable system including at least one programmable processor, which may be a dedicated or general purpose programmable processor, may receive data and instructions from a memory system, at least one input device, and at least one output device, and transmit the data and instructions to the memory system, the at least one input device, and the at least one output device.

The program code for carrying out the methods according to the present invention may be written in any combination of one or more programming languages. These program codes may be provided to a processor or controller of a general purpose computer, special purpose computer, or other programmable data processing apparatus such that the program code, when executed by the processor or controller, causes the functions/operations specified in the flowchart and/or block diagram to be implemented. The program code may be executed entirely on the machine, partly on the machine, partly on the machine as a stand-alone software package and partly on the remote machine or entirely on the remote machine or server.

In the context of the present invention, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include one or more line-based electrical connections, portable computer disks, hard disks, random access memory (RAM), read-only memory (ROM), erasable programmable read-only memory (EPROM or flash memory), optical fibers, portable compact disk read-only memory (CD-ROM), optical storage devices, magnetic storage devices, or any suitable combination of the foregoing.

To provide interaction with a user, the systems and techniques described herein may be implemented on a computer having a display device (e.g., a CRT (cathode ray tube) or LCD (liquid crystal display) monitor) for displaying information to the user; and a keyboard and a pointing device (e.g., a mouse or a trackball) through which a user can provide input to a computer. Other types of devices may also be used to provide interaction with a user; for example, the feedback provided to the user may be any form of sensory feedback (e.g., visual feedback, auditory feedback, or tactile feedback); and input from the user may be received in any form, including acoustic input, speech input, or tactile input.

The systems and techniques described herein may be implemented in a computing system including a background component (e.g., as a data server), or a computing system including a middleware component (e.g., an application server), or a computing system including a front-end component (e.g., a user computer having a graphical user interface or a web browser through which a user may interact with embodiments of the systems and techniques described herein), or a computing system including any combination of such background component, middleware component, or front-end component. The components of the system may be interconnected by any form or medium of digital data communication (e.g., a communication network). Examples of communication networks include a local area network (LAN), a wide area network (WAN), and the Internet.

The computer system may include a client and a server. The client and server are typically remote from each other and typically interact through a communication network. The relationship between the client and the server is generated by a computer program running on the corresponding computer and having a client-server relationship with each other. The server may be a cloud server, which is also referred to as a cloud computing server or a cloud host, and is a host product in a cloud computing service system, so as to solve a defect that a conventional physical host and a VPS (Virtual Private Server) service are difficult to manage and have weak service scalability.

According to the technical solution of the embodiment of the present invention, the permission configuration information matching the IP address can be determined according to the identification information and the IP address of the access account in the authentication message, and the access control entry is generated according to the permission configuration information and the IP address to process the access request of the access account. On the one hand, different access permissions can be set according to role types of access accounts or account attribute information, so that detailed access permission management is realized, flexible setting requirements for different access permissions are met, and internal network resources or services accessible by a user can be accurately controlled. On the other hand, even if the IP of the access account changes at any time, by associating the IP address in the data packet to the access account in real time and determining the matching permission configuration information, the access request based on the IP address can be processed based on the generated access control entry, so that the dynamic management of the access control policy is realized, thereby effectively improving the security of the system.

It is to be understood that the steps of reordering, adding or deleting may be performed using the various forms shown above. For example, the steps described in the present invention may be performed in parallel or sequentially or in a different order, so long as the desired results of the technical solution disclosed in the present invention can be realized, and no limitation is imposed herein.

## Claims

1. A method for processing an access request, comprising:
acquiring (201) identification information and an IP address of an access account from an authentication message;
determining (202) permission configuration information matching the identification information;
generating (203) an access control entry based on the permission configuration information and the IP address; and
processing (204) the access request of the access account based on the access control entry;
wherein generating the access control entry based on the permission configuration information and the IP address comprises:
setting a second destination IP address according to the IP address of the access account;
setting a second source IP address according to an IP address segment allowed by the permission configuration information; and
generating a second access control entry based on the second destination IP address and the second source IP address;
wherein processing the access request of the access account based on the access control entry comprises:
in response to acquiring an access response corresponding to the access request, acquiring a source IP address and a destination IP address in the access response;
associating the destination IP address in the access response with the second access control entry; and
allowing or denying the access response according to whether the destination IP address in the access response belongs to the second source IP address in the second access control entry;
wherein determining permission configuration information matching the identification information comprises:
determining permission configuration information matching the identification information according to account attribute information bound to the identification information, wherein the account attribute information comprises one or more of a service type, an account level, and a security level.

2. The method according to claim 1, wherein determining permission configuration information matching the identification information further comprises:
determining a role type of the access account according to the identification information; and
determining permission configuration information matching the identification information according to a preset access permission corresponding to the role type.

3. The method according to claim 1, wherein acquiring the identification information and the IP address of the access account from the authentication message comprises:
acquiring identification information and the IP address of the access account from a charging data packet corresponding to the access request in response to determining that the access request initiated by the access account passes authentication.

4. The method according to claim 3, wherein the access request is sent based on a remote authentication dial in user service protocol; and
the charging data packet corresponding to the access request comprises a charging data packet of a remote authentication dial-in user service.

5. The method according to claim 1, wherein generating the access control entry based on the permission configuration information and the IP address comprises:
setting a first source IP address according to the IP address of the access account;
setting a first destination port and/or a first destination IP address according to a port range and/or an IP address segment allowed by the permission configuration information; and
generating a first access control entry based on the first source IP address, the first destination port, and/or the first destination IP address.

6. The method according to claim 5, wherein processing the access request of the access account based on the access control entry comprises:
acquiring a source IP address, a destination port, and a destination IP address in the access request in response to acquiring the access request;
associating the source IP address in the access request with the first access control entry; and
allowing or denying the access request according to whether the destination port and the destination IP address in the access request belong to the first destination port and the first destination IP address in the first access control entry.

7. An apparatus for processing an access request, comprising a plurality of modules configured to perform the method according to any one of claims 1 to 6.

8. A network boundary device (620) comprising the apparatus according to claim 7.

9. A system for processing an access request comprising a terminal (610), a server (630), and the network boundary device (620) according to claim 8,
wherein the terminal (610) is configured to initiate an access request to the server, the access request comprising an IP address of an access account; and
the server (630) is configured to receive the access request and send an access response corresponding to the access request to the terminal.

10. The system according to claim 9, further comprising an authentication server,
the terminal is further configured to initiate an authentication request to the authentication server, and after the authentication request is verified, send a charging data packet corresponding to the authentication request to the authentication server, wherein the charging data packet comprises identification information of the access account and the IP address;
the authentication server is configured to authenticate the access account according to the received authentication request;
wherein the authentication request is sent based on a remote authentication dial-in user service protocol; and the charging data packet corresponding to the authentication request comprises a charging data packet of a remote authentication dial-in user service.

11. A non-transitory computer-readable storage medium storing computer instructions when executed by a computer cause the computer to perform the method for processing an access request according to any one of claims 1 to 6.

12. A computer program product comprising a computer program which, when executed by a processor, causes the processor to perform the method for processing an access request according to any one of claims 1 to 6.

## Patentansprüche

1. Verfahren zum Verarbeiten einer Zugriffsanforderung, umfassend:
Erfassen (201) von Identifikationsinformationen und einer IP-Adresse eines Zugriffskontos aus einer Authentifizierungsnachricht;
Bestimmen (202) von Berechtigungskonfigurationsinformationen, die mit den Identifikationsinformationen übereinstimmen;
Erzeugen (203) eines Zugriffssteuerungseintrags basierend auf den Berechtigungskonfigurationsinformationen und der IP-Adresse; und
Verarbeiten (204) der Zugriffsanforderung des Zugriffskontos basierend auf dem Zugriffssteuerungseintrag;
wobei das Erzeugen des Zugriffssteuerungseintrags basierend auf den Berechtigungskonfigurationsinformationen und der IP-Adresse Folgendes umfasst:
Einstellen einer zweiten Ziel-IP-Adresse gemäß der IP-Adresse des Zugriffskontos;
Einstellen einer zweiten Quell-IP-Adresse gemäß einem IP-Adresssegment, das durch die Berechtigungskonfigurationsinformationen zulässig ist; und
Erzeugen eines zweiten Zugriffssteuerungseintrags basierend auf der zweiten Ziel-IP-Adresse und der zweiten Quell-IP-Adresse;
wobei das Verarbeiten der Zugriffsanforderung des Zugriffskontos basierend auf dem Zugriffssteuerungseintrag Folgendes umfasst:
als Reaktion auf das Erfassen einer Zugriffsantwort, die der Zugriffsanforderung entspricht, Erfassen einer Quell-IP-Adresse und einer Ziel-IP-Adresse in der Zugriffsantwort;
Zuordnen der Ziel-IP-Adresse in der Zugriffsantwort zu dem zweiten Zugriffssteuerungseintrag; und
Zulassen oder Verweigern der Zugriffsantwort je nachdem, ob die Ziel-IP-Adresse in der Zugriffsantwort zu der zweiten Quell-IP-Adresse in dem zweiten Zugriffssteuerungseintrag gehört;
wobei das Bestimmen von Berechtigungskonfigurationsinformationen, die mit den Identifikationsinformationen übereinstimmen, Folgendes umfasst:
Bestimmen von Berechtigungskonfigurationsinformationen, die mit den Identifikationsinformationen übereinstimmen, gemäß Kontoattributinformationen, die an die Identifikationsinformationen gebunden sind, wobei die Kontoattributinformationen eines oder mehrere von einem Diensttyp, einer Kontoebene und einer Sicherheitsebene umfassen.

2. Verfahren nach Anspruch 1, wobei das Bestimmen von Berechtigungskonfigurationsinformationen, die mit den Identifikationsinformationen übereinstimmen, ferner Folgendes umfasst:
Bestimmen eines Rollentyps des Zugriffskontos gemäß den Identifikationsinformationen; und
Bestimmen von Berechtigungskonfigurationsinformationen, die mit den Identifikationsinformationen übereinstimmen, gemäß einer voreingestellten Zugriffsberechtigung, die dem Rollentyp entspricht.

3. Verfahren nach Anspruch 1, wobei das Erfassen der Identifikationsinformationen und der IP-Adresse des Zugriffskontos aus der Authentifizierungsnachricht Folgendes umfasst:
Erfassen von Identifikationsinformationen und der IP-Adresse des Zugriffskontos aus einem Abrechnungsdatenpaket, das der Zugriffsanforderung entspricht, als Reaktion auf das Bestimmen, dass die durch das Zugriffskonto eingeleitete Zugriffsanforderung die Authentifizierung besteht.

4. Verfahren nach Anspruch 3, wobei die Zugriffsanforderung basierend auf einem Fernauthentifizierungseinwahlbenutzerdienstprotokoll gesendet wird; und
das Abrechnungsdatenpaket, das der Zugriffsanforderung entspricht, ein Abrechnungsdatenpaket eines Fernauthentifizierungseinwahlbenutzerdienstes umfasst.

5. Verfahren nach Anspruch 1, wobei das Erzeugen des Zugriffssteuerungseintrags basierend auf den Berechtigungskonfigurationsinformationen und der IP-Adresse Folgendes umfasst:
Einstellen einer ersten Quell-IP-Adresse gemäß der IP-Adresse des Zugriffskontos;
Einstellen eines ersten Zielports und/oder einer ersten Ziel-IP-Adresse gemäß einem Portbereich und/oder einem IP-Adresssegment, das durch die Berechtigungskonfigurationsinformationen zulässig ist; und
Erzeugen eines ersten Zugriffssteuerungseintrags basierend auf der ersten Quell-IP-Adresse, dem ersten Zielport und/oder der ersten Ziel-IP-Adresse.

6. Verfahren nach Anspruch 5, wobei das Verarbeiten der Zugriffsanforderung des Zugriffskontos basierend auf dem Zugriffssteuerungseintrag Folgendes umfasst:
Erfassen einer Quell-IP-Adresse, eines Zielports und einer Ziel-IP-Adresse in der Zugriffsanforderung als Reaktion auf das Erfassen der Zugriffsanforderung;
Zuordnen der Quell-IP-Adresse in der Zugriffsanforderung zu dem ersten Zugriffssteuerungseintrag; und
Zulassen oder Verweigern der Zugriffsanforderung je nachdem, ob der Zielport und die Ziel-IP-Adresse in der Zugriffsanforderung zu dem ersten Zielport und der ersten Ziel-IP-Adresse in dem ersten Zugriffssteuerungseintrag gehören.

7. Vorrichtung zum Verarbeiten einer Zugriffsanforderung, umfassend eine Vielzahl von Modulen, die konfiguriert sind, um das Verfahren nach einem der Ansprüche 1 bis 6 durchzuführen.

8. Netzwerkgrenzvorrichtung (620), umfassend die Vorrichtung nach Anspruch 7.

9. System zum Verarbeiten einer Zugriffsanforderung, umfassend ein Endgerät (610), einen Server (630) und die Netzwerkgrenzvorrichtung (620) nach Anspruch 8,
wobei das Endgerät (610) konfiguriert ist, um eine Zugriffsanforderung an den Server einzuleiten, wobei die Zugriffsanforderung eine IP-Adresse eines Zugriffskontos umfasst; und
der Server (630) konfiguriert ist, um die Zugriffsanforderung zu empfangen und eine Zugriffsantwort, die der Zugriffsanforderung entspricht, an das Endgerät zu senden.

10. System nach Anspruch 9, ferner umfassend einen Authentifizierungsserver,
wobei das Endgerät ferner konfiguriert ist, um eine Authentifizierungsanforderung an den Authentifizierungsserver einzuleiten, und nachdem die Authentifizierungsanforderung verifiziert ist, ein Abrechnungsdatenpaket, das der Authentifizierungsanforderung entspricht, an den Authentifizierungsserver zu senden, wobei das Abrechnungsdatenpaket Identifikationsinformationen des Zugriffskontos und der IP-Adresse umfasst;
der Authentifizierungsserver konfiguriert ist, um das Zugriffskonto gemäß der empfangenen Authentifizierungsanforderung zu authentifizieren;
wobei die Authentifizierungsanforderung basierend auf einem Fernauthentifizierungseinwahlbenutzerdienstprotokoll gesendet wird; und das Abrechnungsdatenpaket, das der Authentifizierungsanforderung entspricht, ein Abrechnungsdatenpaket eines Fernauthentifizierungseinwahlbenutzerdienstes umfasst.

11. Nichtflüchtiges computerlesbares Speichermedium, das Computeranweisungen speichert, die, wenn sie von einem Computer ausgeführt werden, den Computer veranlassen, das Verfahren zum Verarbeiten einer Zugriffsanforderung nach einem der Ansprüche 1 bis 6 durchzuführen.

12. Computerprogrammprodukt, umfassend ein Computerprogramm, das, wenn es von einem Prozessor ausgeführt wird, den Prozessor veranlasst, das Verfahren zum Verarbeiten einer Zugriffsanforderung nach einem der Ansprüche 1 bis 6 durchzuführen.

## Revendications

1. Procédé de traitement d'une demande d'accès, comprenant :
l'acquisition (201) d'informations d'identification et d'une adresse IP d'un compte d'accès à partir d'un message d'authentification ;
la détermination (202) d'informations de configuration de permission correspondant aux informations d'identification ;
la génération (203) d'une entrée de contrôle d'accès sur la base des informations de configuration de permission et de l'adresse IP ; et
le traitement (204) de la demande d'accès du compte d'accès sur la base de l'entrée de contrôle d'accès ;
dans lequel la génération de l'entrée de contrôle d'accès sur la base des informations de configuration de permission et de l'adresse IP comprend :
le réglage d'une seconde adresse IP de destination en fonction de l'adresse IP du compte d'accès ;
le réglage d'une seconde adresse IP source en fonction d'un segment d'adresse IP autorisé par les informations de configuration de permission ; et
la génération d'une seconde entrée de contrôle d'accès sur la base de la seconde adresse IP de destination et de la seconde adresse IP source ;
dans lequel le traitement de la demande d'accès du compte d'accès sur la base de l'entrée de contrôle d'accès comprend :
en réponse à l'acquisition d'une réponse d'accès correspondant à la demande d'accès, l'acquisition d'une adresse IP source et d'une adresse IP de destination dans la réponse d'accès ;
l'association de l'adresse IP de destination dans la réponse d'accès à la seconde entrée de contrôle d'accès ; et
l'autorisation ou le refus de la réponse d'accès selon que l'adresse IP de destination dans la réponse d'accès appartient ou non à la seconde adresse IP source dans la seconde entrée de contrôle d'accès ;
dans lequel la détermination d'informations de configuration de permission correspondant aux informations d'identification comprend :
la détermination d'informations de configuration de permission correspondant aux informations d'identification selon des informations d'attribut de compte liées aux informations d'identification, dans lequel les informations d'attribut de compte comprennent un ou plusieurs d'un type de service, d'un niveau de compte et d'un niveau de sécurité.

2. Procédé selon la revendication 1, dans lequel la détermination d'informations de configuration de permission correspondant aux informations d'identification comprend en outre :
la détermination d'un type de rôle du compte d'accès selon les informations d'identification ; et
la détermination d'informations de configuration de permission correspondant aux informations d'identification selon une permission d'accès prédéfinie correspondant au type de rôle.

3. Procédé selon la revendication 1, dans lequel l'acquisition des informations d'identification et de l'adresse IP du compte d'accès à partir du message d'authentification comprend :
l'acquisition d'informations d'identification et de l'adresse IP du compte d'accès à partir d'un paquet de données de facturation correspondant à la demande d'accès en réponse à la détermination que la demande d'accès initiée par le compte d'accès réussit l'authentification.

4. Procédé selon la revendication 3, dans lequel la demande d'accès est envoyée sur la base d'un protocole de service d'utilisateur de numérotation d'authentification à distance ; et le paquet de données de facturation correspondant à la demande d'accès comprend un paquet de données de facturation d'un service d'utilisateur de numérotation d'authentification à distance.

5. Procédé selon la revendication 1, dans lequel la génération de l'entrée de contrôle d'accès sur la base des informations de configuration de permission et de l'adresse IP comprend :
le réglage d'une première adresse IP source en fonction de l'adresse IP du compte d'accès ;
le réglage d'un premier port de destination et/ou d'une première adresse IP de destination en fonction d'une plage de ports et/ou d'un segment d'adresse IP autorisé par les informations de configuration de permission ; et
la génération d'une première entrée de contrôle d'accès sur la base de la première adresse IP source, du premier port de destination et/ou de la première adresse IP de destination.

6. Procédé selon la revendication 5, dans lequel le traitement de la demande d'accès du compte d'accès sur la base de l'entrée de contrôle d'accès comprend :
l'acquisition d'une adresse IP source, d'un port de destination et d'une adresse IP de destination dans la demande d'accès en réponse à l'acquisition de la demande d'accès ;
l'association de l'adresse IP source dans la demande d'accès à la première entrée de contrôle d'accès ; et
l'autorisation ou le refus de la demande d'accès selon que le port de destination et l'adresse IP de destination dans la demande d'accès appartiennent ou non au premier port de destination et à la première adresse IP de destination dans la première entrée de contrôle d'accès.

7. Appareil de traitement d'une demande d'accès, comprenant une pluralité de modules configurés pour réaliser le procédé selon l'une quelconque des revendications 1 à 6.

8. Dispositif de frontière de réseau (620) comprenant l'appareil selon la revendication 7.

9. Système de traitement d'une demande d'accès comprenant un terminal (610), un serveur (630) et le dispositif de frontière de réseau (620) selon la revendication 8,
dans lequel le terminal (610) est configuré pour initier une demande d'accès au serveur, la demande d'accès comprenant une adresse IP d'un compte d'accès ; et
le serveur (630) est configuré pour recevoir la demande d'accès et envoyer une réponse d'accès correspondant à la demande d'accès au terminal.

10. Système selon la revendication 9, comprenant en outre un serveur d'authentification, le terminal est en outre configuré pour initier une demande d'authentification au serveur d'authentification, et après que la demande d'authentification est vérifiée, envoyer un paquet de données de facturation correspondant à la demande d'authentification au serveur d'authentification, dans lequel le paquet de données de facturation comprend des informations d'identification du compte d'accès et de l'adresse IP ;
le serveur d'authentification est configuré pour authentifier le compte d'accès selon la demande d'authentification reçue ;
dans lequel la demande d'authentification est envoyée sur la base d'un protocole de service d'utilisateur de numérotation d'authentification à distance ; et le paquet de données de facturation correspondant à la demande d'authentification comprend un paquet de données de facturation d'un service d'utilisateur de numérotation d'authentification à distance.

11. Support de stockage non transitoire lisible par ordinateur stockant des instructions informatiques qui, lorsqu'elles sont exécutées par un ordinateur, amènent l'ordinateur à réaliser le procédé de traitement d'une demande d'accès selon l'une quelconque des revendications 1 à 6.

12. Produit de programme informatique comprenant un programme informatique qui, lorsqu'il est exécuté par un processeur, amène le processeur à réaliser le procédé de traitement d'une demande d'accès selon l'une quelconque des revendications 1 à 6.
